# EUROPEAN PATENT SPECIFICATION

(11) **EP 2 216 260 B1**
(45) Date of publication and mention of the grant of the patent: **04.04.2018**
(21) Application number: 08854659.3
(22) Date of filing: 12.11.2008
(51) Int. Cl.: B31B 70/84, B65D 33/38, B65D 75/58, B29C 67/00, B29L 9/00, B32B 3/02, B32B 3/04, B32B 7/12, B32B 27/08, B32B 27/28, B32B 27/32

(54) **END-FACE TREATED LIQUID POURING NOZZLE AND METHOD OF PRODUCING THE SAME**
FLÜSSIGKEITSAUSSTOSSDÜSE MIT VERARBEITETER KANTENFLÄCHE UND HERSTELLUNGSVERFAHREN DAFÜR
BUSE D'ÉJECTION DE LIQUIDE AVEC FACE LATÉRALE TRAITÉE, ET PROCESSUS PERMETTANT DE LA PRODUIRE

(30) Priority: 30.11.2007 JP 2007309749
(43) Date of publication of application: 11.08.2010
(73) Proprietor: Yushin Co., Ltd., Sanjo-shi, Niigata 955-0002 (JP)
(72) Inventor: FUTASE, Katsunori, Sanjo-shi Niigata 955-0002 (JP)
(74) Representative: Grünecker Patent- und Rechtsanwälte PartG mbB
(86) International application number: PCT/JP2008/070964
(87) International publication number: WO 2009/069514

(56) References cited:
- JP-A- 2005 059 958
- JP-A- 2005 059 958
- JP-U- 58 074 525
- US-A- 4 238 263

## Description

### TECHNICAL FIELD

This invention relates to an end face structure of a laminate film comprising a uniaxially oriented or biaxially oriented base film layer and a sealant layer(s) laminated on at least one-side face or both faces of the base film layer so as to sandwich the base film layer, and a process for treating an end face of the laminate film, and further a liquid pouring nozzle made from an end face-treated laminate film and a method of producing the same. Particularly, the invention proposes a technique in a soft package bag fitted with the liquid pouring nozzle made from the laminate film for preventing an adhesive, an anchor coating material, an ink or the like used between the base film layer and the sealant layer(s) from contacting with a packing material in the bag.

### BACKGROUND ART

As a liquid pouring nozzle and a soft package bag using the same are known ones disclosed, for example, in JP-A-2005-59958. This liquid pouring nozzle is made from a pair of laminate films each comprising a uniaxially oriented or biaxially oriented base film layer and sealant layers laminated on both front and back faces of the base film layer, positioning the sealant layers laminated on the back face of each base film layer to oppose each other and fusing the laminate films at peripheral portions excluding nozzle base end sides to each other. In the laminate film, it is common that an adhesive layer or an anchor coating layer, or an ink layer printed to the base film layer is included between the base film layer and the sealant layer.

A soft package bag fitted with the liquid pouring nozzle prepared by using such laminate films is constructed by fusion-joining an outer surface of a base end portion of the liquid pouring nozzle to an inner face of a fused portion at a side portion or a top portion of an inner face of a main body of the package bag. Therefore, a cutting end face of the liquid pouring nozzle is exposed to an interior of the package bag filled with a packing material.

### DISCLOSURE OF THE INVENTION

### PROBLEMS TO BE SOLVED BY THE INVENTION

In the conventional package bag provided with the aforementioned liquid pouring nozzle, however, when the liquid pouring nozzle is usually fusion-joined to the main body of the package bag, an adhesive layer, an anchor coating layer and the like are exposed from a base end side of the liquid pouring nozzle formed by a laminate film to an end face of the laminate film. That is, the end face of the laminate film is attached to a fused portion of the main body of the package bag so as to be coincident with an inner edge of the fused portion or protrude from the inner edge or toward a side of a filling space for a packing material. As a result, the packing material filed in the soft package bag, for example, liquid seasonings such as soy sauce and the like, liquid viscous material such as beverages and so on contact with a base end side of the liquid pouring nozzle at least when the packing material is poured. In this case, the liquid packing material also results to contact with the adhesive layer or anchor coating layer or in some case the packing material results to contact with the ink layer exposed to the end face of the laminate film in the base end side of the liquid pouring nozzle, which comes into problem in the safety and sanitation when the packing material is particularly food and drink.

The invention is developed for solving the problems of the conventional technique, is to provide an end face structure for completely preventing the exposure of adhesive layer, anchor coating layer, ink layer and the like at an end face of a laminate film comprising a biaxially oriented base film layer and a sealant layer laminated on at least one-side face of the base film layer or sealant layers laminated so as to sandwich the base film layer, and a process for treating such an end face, and further is to provide a liquid pouring nozzle capable of surely preventing the contact of the adhesive layer and so on with a packing material in a soft package bag by utilizing such an end face treatment and a method of producing the same.

### MEANS FOR SOLVING PROBLEMS

The present invention is defined by the subject matter of independent claims 1, and 3, respectively. A further embodiment is defined in the dependent claim 4.

The invention proposes a liquid pouring nozzle formed by fusing peripheral edge portions of a pair of front and back laminate films or a single laminate film folded at its central portion into two parts excluding a portion corresponding to a base end side of the nozzle to define a pouring channel inside, each laminate film comprising a uniaxially or biaxially oriented base film layer and a sealant layer(s) laminated on at least one-side face of the base film layer, characterized in that the sealant layer laminated on the at least one-side face of the base film layer at the portion corresponding to the base end side of the nozzle is fused in a state of protruding from an edge of the base film layer by a process, in which an end portion of the latninate film is heated under pressure with heat-sealing means comprising a pair of heat seal plates or heat seal rollers that extend parallel to each other, so as to be pressurized from above and beneath to cover an end face inclusive of an adhesive layer and the like exposed at the end face of the laminate film between the sealant layer and the base film layer.

The invention further provides, a liquid pouring nozzle formed by fusing peripheral edge portions of a pair of front and back laminate films or a single laminate film folded at its central portion into two parts, excluding a portion corresponding to a base end side of the nozzle to define a pouring channel inside, each laminate film comprising a uniaxially or biaxially oriented base film layer and sealant layers laminated so as to sandwich the base film layer, characterized in that the sealant layers sandwiching each base film layer in the front and back films at the portion corresponding to the base end side of the nozzle are fusion-joined to each other in the state of protruding from an edge of the base film layer by a process, in which an end portion of the laminate film is heated under pressure with heat-sealing means comprising a pair of heat seal plates or heat seal rollers that extend parallel to each other, so as to be pressurized from above and beneath to cover an end face of the base film layer inclusive of adhesive layers and the like exposed at the end face of the laminate film between the sealant layers and the base film layer.

In addition, the invention proposes a method of producing a liquid pouring nozzle by fusing peripheral edge portions of a pair of front and back laminate films or a single laminate film folded at its central portion into two parts, excluding a portion corresponding to a base end side of the nozzle to define a pouring channel inside, each laminate film comprising a uniaxially or biaxially oriented base film layer and a sealant layer(s) laminated on at least one-side face of the base film layer, characterized in that the sealant layer laminated on the at least the-one-side face of each base film layer at the portion corresponding to the base end side of the nozzle is fused in a state of protruding from an edge of the base film layer to cover an end face inclusive of an adhesive layer and the like exposed at the end face of the laminate film between the sealant layer and the base film layer by heating under pressure with heart-sealing means comprising a pair of heat seal plates or heat seal rollers that extend parallel to each other so as to be pressurized from above and beneath, and thereafter the front and back laminate films or the single laminate film folded at the central portion into two parts are fused to each other at a peripheral edge portion excluding the portion corresponding to the base end side of the nozzle.

In the above invention, the method is preferably a method of producing a liquid pouring nozzle wherein the sealant layers laminated so as to sandwich the base film layer at side portions corresponding to the base end side of the nozzle are fusion-joined to each other in the state of protruding from the edge of the base film layer to cover an end face of the base film layer by the process of heating under pressure with heat-sealin means comprising a pair of heat seal plates, or a pair of heat seal rollers that extend parallel to each other, so as to be pressurized from above and beneath.

### EFFECTS OF THE INVENTION

The sealant layer(s) of front face side or front and back face sides laminated on at least one-side face of the uniaxially or biaxially oriented base film layer by the action of the adhesive layer, anchor coating layer and the like is fused in the state of protruding from the base film layer at the base end side of the nozzle, whereby the exposure of the adhesive layer, anchor coating layer and the like can be prevented over a whole of the end face of the laminate film inclusive of the joint portion.

Although the followings are explained assuming a case of three-layer structure that the sealant layers are disposed on both faces of the base film layer, the same actions and effects as in this case are obtained even in a case of two-layer structure that the sealant layer is disposed on only one-side face of the base film layer or a case of multilayer structure inclusive of more than 3 layers.

The end face treatment of the laminate film is particularly utilized in the treatment for the base end face of the liquid pouring nozzle, whereby the sealant layers laminated on both front and back faces of the base film layer sandwiching it are fusion-joined to each other in the state of protruding from the edge of the base film layer, so that even if the fusion-joining is carried out at any given time, a fear of contacting the liquid pouring nozzle integrally fusion-joined to the main body of the soft package bag and forming a part of the soft package bag with a packaging member inside the bag such as adhesive layer, anchor coating layer or the like will be surely removed, and hence even if the packing material is food and drink, sufficient safety, sanitation and the like can be always ensured.

Moreover, when the base end portion of the liquid pouring nozzle is fusion-joined to the main body of the package bag in the state of protruding toward a storage space of the packing material in the main body of the package bag, it is preferable that the sealant layers laminated through the base film layer at the base end side of the nozzle but also over the whole of the protruding portion are fused to each other likewise the base end side.

When the end face treatment of the laminate film is applied in advance to the two front and back laminate films or the single laminate film folded at its central portion into two parts in the production of the liquid pouring nozzle, the sealant layers located through the base film layer at a side portion of the film subsequently rendering into the base end side of the liquid pouring nozzle are fusion-joined to each other in the state of protruding from the edge of the base film layer through a heat seal plate, a heat seal roller or the like, for example, subjected to a releasing treatment with silicone, polytetrafluoroethylene or the like, whereby the adhesive layer, anchor coating layer and the like are completely coated with both the sealant layers to make these layers latescent, and thereafter when the required liquid pouring nozzle is formed by the fusion-joining and the resulting liquid pouring nozzle is joined to the main body of the package bag to form a soft package bag, a fear of contacting the liquid pouring nozzle with the packaging member in the bag such as adhesive layer, anchor coating layer and the like can be surely removed likewise the above.

The above remark can also be applied for a case of producing a liquid pouring nozzle wherein a nozzle film formed in advance with many nozzles having a shape and a size corresponding to the liquid pouring nozzle is fed toward a film for a main body of a soft package bag being consecutively fed, and a base end portion of each nozzle is heat-sealed at one-side outer face of the nozzle made of a sealant layer having a melting point lower than that of a sealant layer of an inner face of the nozzle to a side portion of an inner face of the film for the main body of the soft package bag so that the nozzle will be fused to the film for the main body of the soft package bag, and then an unnecessary portion of the nozzle film is removed by cutting off from the nozzle, while a film portion at a front face side of the each nozzle and a film portion at a back face side of the nozzle are integrally heated under pressure, for example, by the aforementioned heat-sealing means in the presence of a releasing material between both the film portions to fuse the sealant layers in the front and back film portions laminated so as to sandwich the base film layer to each other at the base end side of the nozzle in the front and back films in the state of protruding from the edge of the base film layer.

In the latter case, the nozzle prepared in advance is attached to the main body of the package bag in the feed-running of the film for the main body of the package bag for automatically filling the packing material in a packaging machine and can form a given liquid pouring nozzle, so that the liquid pouring nozzle can be produced more efficiently than that in a case of the fusion-joining of the sealant layers located sandwiching the base film layer to each other being conducted at the other independent step.

The above remarks can also be applied for a case wherein a base end side of a nozzle having a shape and a size corresponding to the liquid pouring nozzle is located in a region corresponding to a fusing portion of a side portion or top portion of a main body of a soft package bag, and a film for the main body of the soft package bag is heated under pressure from the outer surface side of the film for the main body of the package bag by heat-sealing means in the presence of a releasing material between the portions of the front and back films in the nozzle so that the outer surface of the nozzle will be fused to the inner face of the main body of the package bag in the fusing region of the main body of the resulting soft package bag while ensuring the pouring channel, while the sealant layers laminated so as to sandwich the base film layer at the base end side of the nozzle in each of the front and back films are fused to each other in the state of protruding from the edge of the base film layer to construct the liquid pouring nozzle.

### BRIEF DESCRIPTION OF THE DRAWINGS

FIG. 1 is a schematic view showing an embodiment of the liquid pouring nozzle according to the invention;
FIG. 2 is a section view illustrating a production step of a liquid pouring nozzle;
FIG. 3 is a schematically perspective view illustrating a main part in the production method of a liquid pouring nozzle;
FIG. 4 is a section view illustrating subsequent steps in FIG. 3;
FIG. 5 is a section view illustrating another production step of a liquid pouring nozzle; and
FIG. 6 is a photograph showing a section of a liquid pouring nozzle fused to a main body of a soft package bag in a step of FIG. 5.

### EMBODIMENT OF THE INVENTION

### [BEST MODE FOR CARRYING OUT THE INVENTION]

The invention will be described with respect to an embodiment of a liquid pouring nozzle formed by using a laminate film of three-layer structure that sealant layers are disposed on both faces of a base film layer.

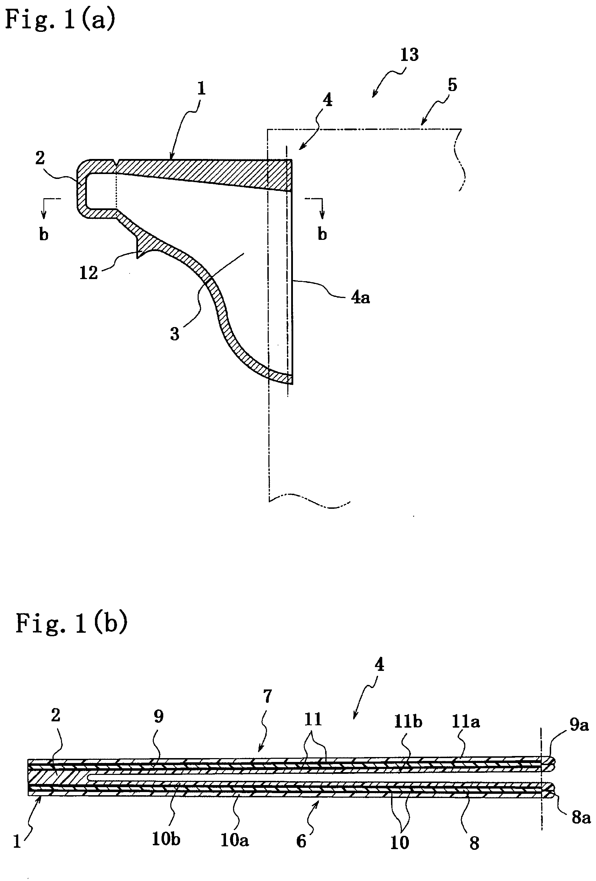

FIG. 1 is a schematic view showing an embodiment of the liquid pouring nozzle according to the invention, and FIG. 1(b) is an enlarged section view taken along a line b-b in a side view of the nozzle shown in FIG. 1(a).

Moreover, a shaded portion in the figure shows a fusion-joint portion 1 formed at peripheral edge portions excluding a portion corresponding to a base end side of the nozzle in a pair of front and back laminate films or a single laminate film folded at its central portion into two parts. In the fusion-joint portion 1, a top fused portion 2 is removed by breaking or cutting, whereby a pouring outlet can be formed in a top of a pouring channel 3 defined in the interior of the fusion-joint portion 1.

A base end portion of the liquid pouring nozzle 4 is fusion-joined, for example, to an upper end portion and a side portion of a main body 5 of a soft package bag shown by a phantom line in FIG. 1(a) to constitute a part of a soft package bag 13.

As shown in FIG. 1(b), each of a front face side film portion 6 and a back face side film portion 7 in the liquid pouring nozzle 4 comprises a uniaxialy or biaxially oriented base film layer 8, 9, and sealant layers 10a, 10b and 11a, 11b laminated on both faces of the each base film layer 8, 9 through adhesive layers 10, 11 sandwiching the base film layer and having a thickness of about 3-8 µm or an anchor coating layer having a thickness of about 0.1-0.5 µm or sometimes a printing layer formed on one-side face of the base film layer 8, 9. In the liquid pouring nozzle 4, the respective sealant layers 10a, 10b and 11a, 11b laminated sandwiching the base film layer 8, 9 in the front and back film portions 6, 7 are fusion-joined to each other at a portion of a base end side 4a of the liquid pouring nozzle 4 at a posture of protruding from an edge position of the base film layer 8, 9 shown by a dashed line in the figure, whereby the adhesive layers 10, 11 and the like are completely covered with the sealant layers 10a, 10b and 11a, 11b.

Moreover, numeral 12 is a liquid-cutting projection formed in a lower-side fusion-joint portion of the liquid pouring nozzle 4 for preventing a liquid or the like as a packing material from falling down along the fusion-joint portion 1 of the liquid pouring nozzle 4 toward the side of the main body 5 of the package bag when the soft package bag 13 is recovered to stand after the packing material is poured from the package bag 13.

When the liquid pouring nozzle 4 having the above construction is in the state of joining to the main body 5 of the package bag as shown in FIG. 1(a), all of the adhesive layers 10, 11 and the like in the respective front and back film portions 6, 7 are covered with the sealant layers 10a, 10b and 11a, 11b at the base end side 4a of the liquid pouring nozzle 4, so that even if the base end side 4a of the liquid pouring nozzle 4 contacts with the packing material inside the soft package bag 13 under a state of joining the liquid pouring nozzle 4 to the main body 5 of the package bag, the contact of the adhesive layers 10, 11 and the like with the liquid or the like as the packing material in the bag is prevented sufficiently with the sealant layers 10a, 10b and 11a 11b irrespective of the soft package bag 13 being a standing posture or a tilting posture in the pouring of the liquid or the like.

Moreover, when the liquid pouring nozzle 4 is joined to the main body 5 of the package bag at a posture of protruding the base end portion somewhat toward a storage space for the packing material in the main body 5 of the package bag, it is preferable that the sealant layers 10a, 10b and 11a, 11b laminated sandwiching the base film layer 8, 9 are fusion-joined in the state of protruding from the base film 8, 9 in not only the base end side 4a of the liquid pouring nozzle 4 but also each part of the fusion-joint portion 1 adjacent to the base end side 4a and protruding into the storage space for the packing material, whereby the adhesive layers 10, 11 and the like are covered with these sealant layers 10a, 10b and 11a, 11b in view of sufficiently preventing the contact of the adhesive layers 10, 11 and the like with the packing material in the bag.

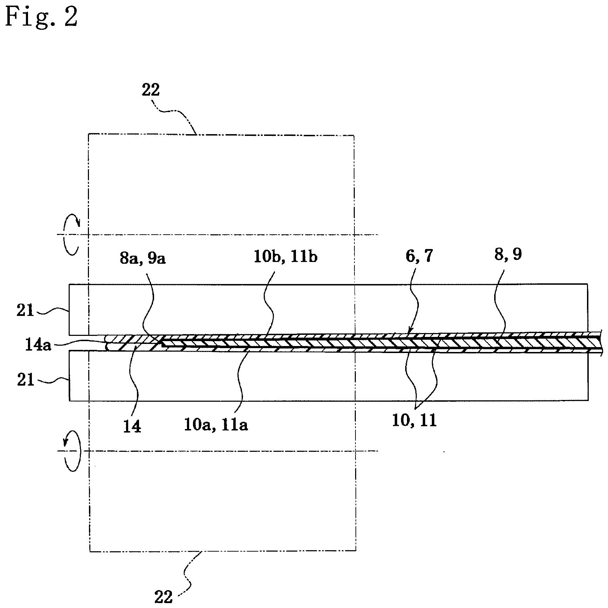

FIG. 2(a) is a section view illustrating a step subjected to the front and back film portions 6, 7 for producing the liquid pouring nozzle 4 as mentioned above. At this moment, a side portion of each of front and back laminate films or a single laminate film folded at its central portion into two parts, which corresponds to the base end side 4a of the liquid pouring nozzle 4 afterward, or one side portion of the film portion 6, 7 corresponding to the base end side 4a afterward in the illustrated embodiment is formed so that the sealant layers 10a, 10b and 11a, 11b are heated and pressurized from up and down directions in the figure by means of a pair of heat seal plates 21 subjected, for example, to a releasing treatment with silicone, polyteterafluoroethylene or the like to fusion-fluidize these sealant layers 10a, 10b and 11a, 11b laminated sandwiching the base film layers 8, 9, and hence these sealant layers 10a, 10b and 11a, 11b are fusion-joined to each other in the state of protruding from the edges 8a, 9a of the base film layers 8, 9 to form a fusion joint portion 14, which completely covers the adhesive layers 10, 11 and the like exposed at the end faces of the front and back film portions 6, 7.

Although the above is described with respect to the case that the fusion joint portion 14 covering the adhesive layers 10,11 and the like are formed with the pair of heat seal plates 21, the similar fusion-joint portion 14 may be formed by using a pair of heat seal rolls 22 subjected to the similar releasing treatment as shown by a phantom line instead of the heat seal plates 21, wherein the side portions of the film portions 6, 7 are sandwiched between the rolls and the sealant layers 10a, 10b and 11a, 11b are heated and pressurized by relative rolling motion of the rolls 22 along these side portions in a direction perpendicular to a face of the figure. This has an advantage that the required fusion-joint portion 14 can be formed continuously at a high speed as compared with the case of using the heat seal plate 21.

After the formation of the fusion-joint portion 14 covering the adhesion layers 10, 11 and the like, the sealant layers 10b, 11b located opposite to each other are fusion-joined, for example, with heat seal means as previously mentioned at a peripheral edge portion of the fusion-joint portion 14 excluding the side edge 14a corresponding to the base end side 4a of the liquid pouring nozzle 4 in the front and back film portions 6, 7 made of front and back laminate films or single laminate film folded at its central portion into two parts, whereby the liquid pouring nozzle 4 is formed defining the required pouring path 3.

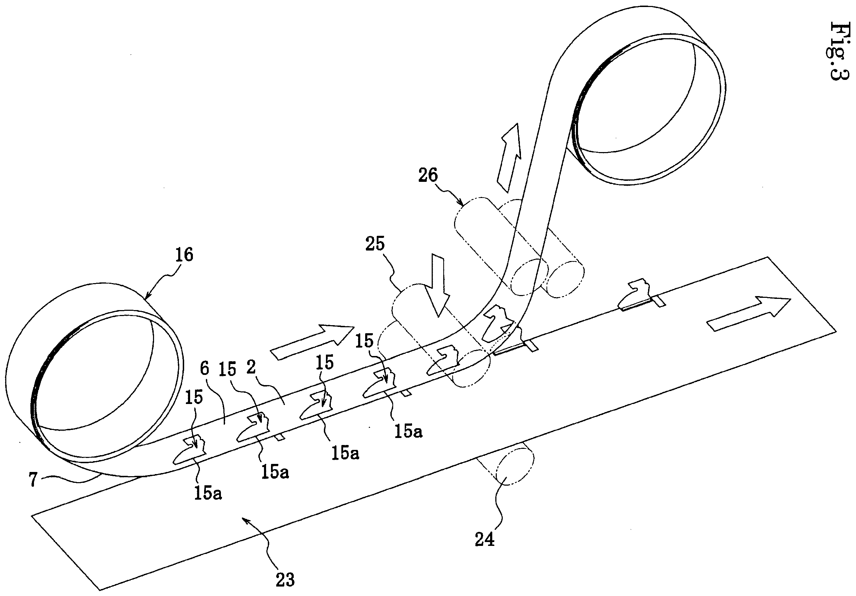

FIG. 3 is a schematically perspective view illustrating a main part in another production method of the liquid pouring nozzle 4. At this moment, a nozzle film 16 having a plurality of nozzles 15 with a form and a size substantially corresponding to the liquid pouring nozzle 4, which are formed in advance by fusion-joining the sealant layers 10b, 11b opposing to each other in the respective front side film portion 6 and back side film portion 7 made of the front and back laminate films or a single laminate film folded at its central portion into two parts at peripheral edge portions excluding the side portions corresponding to the base end side 4a of the nozzle 4 by means of a proper heat seal means or the like, is fed at a given speed toward a film 23 for a main body of a soft package bag consecutively fed at a constant speed. At a timing that each of these nozzles 15 arrives at a pressure roll 25 located opposite to a heat roll 24, the pressure roll 25 is moved and displaced to the heat roll 24, whereby the nozzle 15 is fusion-joined to the film 23 for the main body of the soft package bag under constant-speed running of both the films 16, 23 by heat-sealing the base end side of the nozzle 15 to the sealant layer in an inner face of the film 23 for the main body of the soft package bag with, for example, the sealant layer 11a in an outer face of the back side film portion 7 at one-side portion of the film 23, and then an unnecessary portion of the nozzle film 16 is removed by cutting along a tear guiding dent formed around the nozzle 15 under an action of a separation film 26.

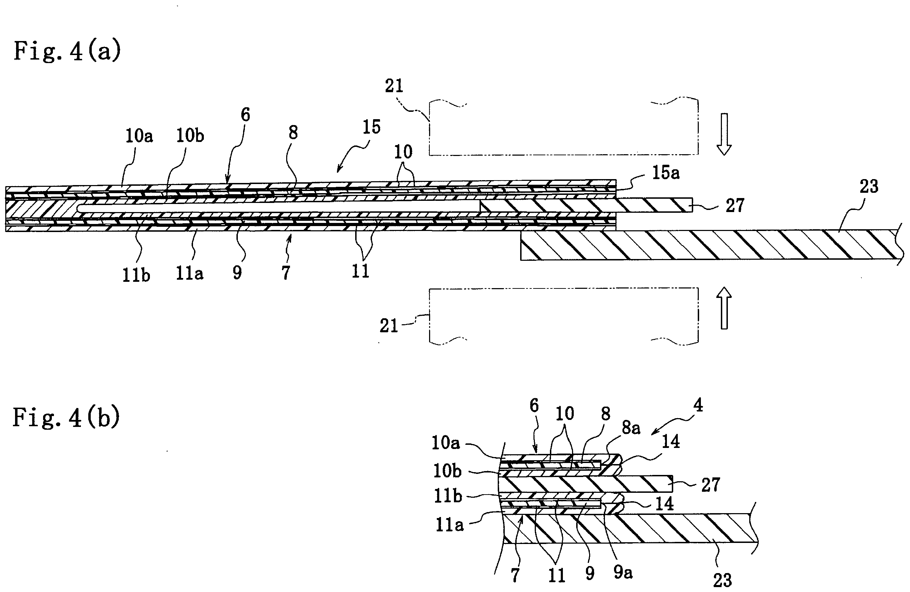

On the other hand, with respect to the nozzle 15 fusion-joined to the film 23 for the main body of the soft package bag, for example, after the unnecessary portion of the nozzle film 16 is removed by separation, as shown by an enlarged section in FIG. 4, each of the front side film portion 6 and back side film portion 7 for the nozzle 15 is rapidly and integrally heated and pressurized together with the film 23 for the main body of the soft package bag in the presence of the releasing material 27 such as silicone rubber, polytetrafluoroethylene or the like by the heat seal means such as heat seal plate 21, heat seal roll 22 or the like, whereby the sealant layers 10a, 10b and 11a, 11b of the front and back film portions 6, 7 laminated sandwiching the base film layers 8, 9 are fusion-joined at the base end side 15a of the nozzle 15 to each other in the state of protruding from edges 8a, 9a of the base film layers as shown in FIG. 4(b), and the adhesive layers 10, 11 and the like are completely covered with the resulting fusion-joint portion 14 to construct the given liquid pouring nozzle 4.

As regards the thus produced liquid pouring nozzle 4, the film 23 for the main body of the soft package bag is folded at its widthwise central portion into two parts in the state of taking out the releasing material 27, and the inner face sealant layer at the other side portion of the main body is fusion-joined to the outer face sealant layer 10a having a lower melting point in the front side film portion 6 in the liquid pouring nozzle 4, while a fusion portion corresponding to a bottom portion or a top portion of the package bag is formed in the film 23 for the main body of the soft package bag itself, whereby required soft package bag 13 can be produced.

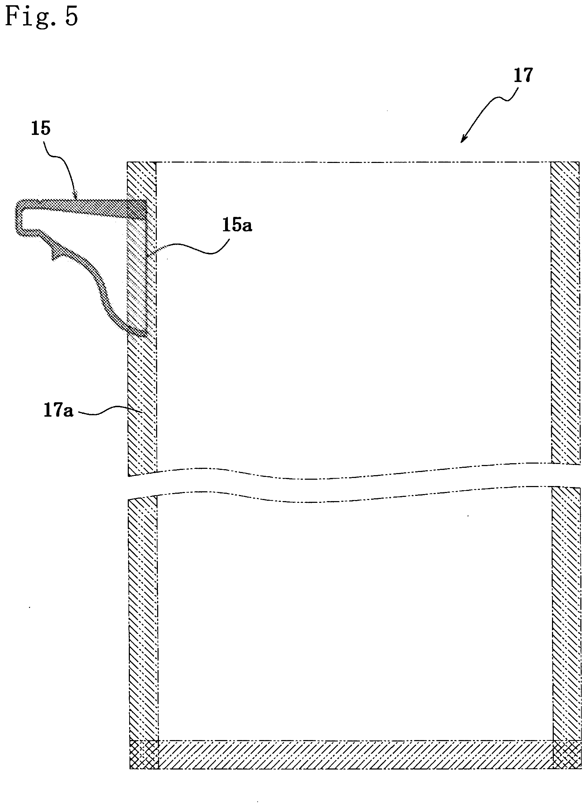

FIG. 5 is a side view illustrating another production step of the liquid pouring nozzle. In this case, regardless whether or not the nozzle 15 having a form and a size substantially corresponding to the liquid pouring nozzle 4 and formed by fusion-joining front and back film portions 6, 7 made of front and back laminate films or a single laminate film folded at its central portion into two parts at peripheral edge portions excluding a side portion corresponding to the base end side 4a of the liquid pouring nozzle 4 as previously mentioned in FIG. 3 is fusion-joined in advance to the inner face of the film 23 for the main body of the soft package bag at the one side portion of the film 23 as mentioned in relation with FIG. 3, the base end side 15a of the nozzle 15 is located in a region corresponding to a side or top fused portion of the main body 17 of the soft package bag or a fused portion 17a at the side portion and its upper end portion shown by a phantom line in the figure, while as previously mentioned, the releasing material 27 is interposed between front and back film portions 6, 7 in the nozzle 15 and the film 23 for the main body of the soft package bag sandwiching the nozzle 15 is heated and pressurized in such a state from the outer face side of the film 23 for the main body of the package bag by means of a heat seal means not shown, whereby the sealant layers 10a, 11a at the outer face of the nozzle 15 are fused in the resulting fused portion 17a of the main body 17 for the soft package bag to the inner face sealant layers in the main body 17 of the package bag and also the sealant layers 10a, 10b and 11a, 11b of the front and back film portions 6, 7 laminated sandwiching the base film layers 8, 9 are fused to each other at the base end side 15a of the nozzle 15 in the state of protruding from the edges 8a, 9a of the base film layers as mentioned in relation with FIGS. 1, 2 and 4 to form the fusion-joint portion 14 completely covering the adhesive layers 10, 11 and the like. Thus, the production of the liquid pouring nozzle 4 can be finished simultaneously with the production of the soft package bag 13.

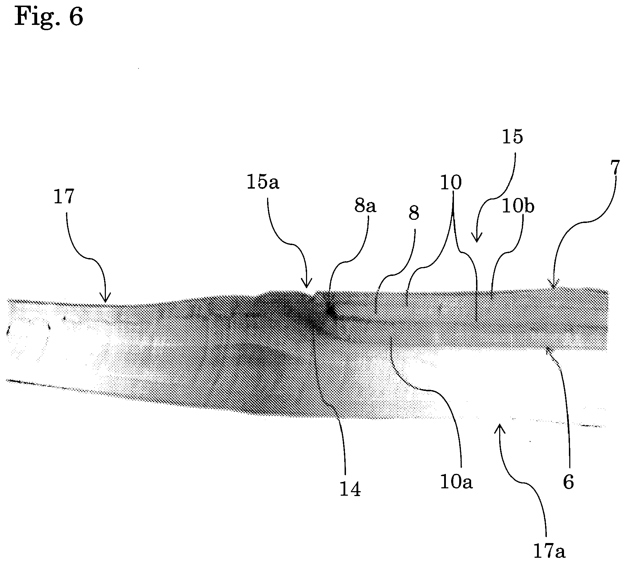

Even in the thus produced liquid pouring nozzle 4, as shown by a section photograph in FIG. 6, the adhesive layers 10, 11 and the like are completely covered with the sealant layers 10a, 10b and 11a 11b, so that even if the packing material in the soft package bag 13 is contacted with the base end side 4a of the liquid pouring nozzle 4, the contact of the adhesive layers 10, 11 and the like with the packing material in the bag is surely obstructed by the fusion-joint portion 14, and as a result, sufficient safety and sanitation can be always ensured.

### INDUSTRIAL APPLICABILITY

The end face treating structure of the laminate film and end face treating method according to the invention can be widely utilized in the field requiring high safety and sanitation. Also, the liquid pouring nozzle utilizing the above end face treatment and the production method thereof can be preferably utilized in a soft package bag for liquid or viscous foods and drinks inclusive of soy sauce, sauce, various seasonings, soups, fruits juices and other powder and granular substances, cosmetics, pharmaceutical products and so on, or a package bag heated at a higher temperature such as retort foods.

## Claims

1. A liquid pouring nozzle (4) formed by fusing peripheral edge portions of a pair of front and back laminate films (6, 7) or a single laminate film folded at its central portion into two parts (6, 7), excluding a portion corresponding to a base end side (4a) of the nozzle (4) to define a pouring channel (3) inside, each laminate film (6, 7) comprising a uniaxially or biaxially oriented base film layer (8, 9) and a sealant layer(s) (10a, 10b, 11a, 11b) laminated on at least one-side face of the base film layer (8, 9),
**characterized in that**
the sealant layer (10a, 10b, 11a, 11b) laminated on the at least one-side face of each base film layer (8, 9) at the portion corresponding to the base end side (4a) of the nozzle (4) is fused in a state of protruding from an edge (8a, 9a) of the base film layer (8, 9) by a process, in which an end portion of the laminate film (6, 7) is heated under pressure with heat-sealing means comprising a pair of heat seal plates (21) or heat seal rollers (22) that extend parallel to each other, so as to be pressurized from above and beneath to cover an end face inclusive of an adhesive layer (10, 11) and the like exposed at the end face of the laminate film (6, 7) between the sealant layer (10a, 10b, 11a, 11b) and the base film layer (8, 9).

2. A liquid pouring nozzle (4) formed by fusing peripheral edge portions of a pair of front and back laminate films (6, 7) or a single laminate film folded at its central portion into two parts (6, 7), excluding a portion corresponding to a base end side (4a) of the nozzle (4) to define a pouring channel (3) inside, each laminate film (6, 7) comprising a uniaxially or biaxially oriented base film layer (8, 9) and sealant layers (10a, 10b, 11a, 11b) laminated so as to sandwich the base film layer (8, 9),
**characterized in that**
the sealant layers (10a, 10b, 11a, 11b) sandwiching each base film layer (8, 9) in the front and back laminate films (6, 7) at the portion corresponding to the base end side (4a) of the nozzle (4) are fusion-joined to each other in a state of protruding from an edge of the base film layer (8, 9) by a process, in which an end portion of the laminate film (6, 7) is heated under pressure with heat-sealing means comprising a pair of heat seal plates (21) or heat seal rollers (22) that extend parallel to each other, so as to be pressurized from above and beneath to cover an end face of the base film layer (8, 9) inclusive of adhesive layers (10, 11) and the like exposed at the end face of the laminate film (6, 7) between the sealant layers (10a, 10b, 11a, 11b) and the base film layer (8, 9).

3. A method of producing a liquid pouring nozzle (4) by fusing peripheral edge portions of a pair of front and back laminate films (6, 7) or a single laminate film folded at its central portion into two parts (6, 7), excluding a portion corresponding to a base end side (4a) of the nozzle (4) to define a pouring channel inside, each laminate film (6, 7) comprising a uniaxially or biaxially oriented base film layer (8, 9) and a sealant layer(s) (10a, 10b, 11a, 11b) laminated on at least one-side face of the base film layer (8, 9),
**characterized in that**
the sealant layer (10a, 10b, 11a, 11b) laminated on the at least one-side face of each base film layer (8, 9) at the portion corresponding to the base end side (4a) of the nozzle (4) is fused in a state of protruding from an edge of the base film layer (8, 9) to cover an end face inclusive of an adhesive layer (10, 11) and the like exposed at the end face of the laminate film (6, 7) between the sealant layer (10a, 10b, 11a, 11b) and the base film layer (8, 9) by heating under pressure with heat-sealing means comprising a pair of heat seal plates (21) or heat seal rollers (22) that extend parallel to each other so as to be pressurized from above and beneath, and thereafter the front and back laminate films (6, 7) or the single laminate film folded at the central portion into two parts (6, 7) are fused to each other at a peripheral edge portion excluding the portion corresponding to the base end side (4a) of the nozzle (4).

4. The method of producing a liquid pouring nozzle (4) according to claim 3, wherein the sealant layers (10a, 10b, 11a, 11b) laminated so as to sandwich the base film layer (8, 9) at side portions corresponding to the base end side (4a) of the nozzle (4) are fusion-joined to each other in the state of protruding from the edge of the base film layer (8, 9) to cover an end face of the base film layer (8, 9) by the process of heating under pressure with heat-sealing means comprising a pair of heat seal plates (21), or a pair of heat seal rollers (22) that extend parallel to each other, so as to be pressurized from above and beneath.

## Patentansprüche

1. Flüssigkeitsausstoßdüse (4), die durch Verschmelzen von peripheren Randabschnitten eines Paares von vorderen und hinteren Laminatfolien (6, 7) oder einer einzelnen Laminatfolie, die an ihrem mittleren Abschnitt in zwei Teile (6, 7) gefaltet ist, geformt wird, mit Ausnahme eines Abschnitts entsprechend einer Basisendseite (4a) der Düse (4), um einen Fließkanal (3) im Inneren zu definieren, wobei jede Laminatfolie (6, 7) eine uniaxial oder biaxial ausgerichtete Basisfolienschicht (8, 9) und Versiegelungsschichten (10a, 10b, 11a, 11b) umfasst, die zumindest einseitig auf die Basisfolienschicht (8, 9) laminiert sind,
**dadurch gekennzeichnet, dass**
die Versiegelungsschicht (10a, 10b, 11a, 11b), die zumindest einseitig auf jede Basisfolienschicht (8, 9) laminiert ist, an dem Abschnitt entsprechend der Basisendseite (4a) der Düse (4) in einem Zustand verschmolzen wird, in dem sie an einem Rand (8a, 9a) der Basisfolienschicht (8, 9) vorsteht, durch einen Prozess, in dem ein Endabschnitt der Laminatfolie (6, 7) unter Druck mit einem Heißsiegelungsmittel erhitzt wird, das ein Paar von Heißsiegelungsplatten (21) oder Heißsiegelungswalzen (22) umfasst, die sich parallel zueinander erstrecken, um von oben und unten mit Druck beaufschlagt zu werden und eine Endfläche einschließlich einer Haftfolie (10, 11) und dergleichen abzudecken, die an der Endfläche der Laminatfolie (6, 7) zwischen der Versiegelungsschicht (10a, 10b, 11a, 11b) und der Basisfolienschicht (8, 9) freiliegt.

2. Flüssigkeitsausstoßdüse (4), die durch Verschmelzen von peripheren Randabschnitten eines Paares von vorderen und hinteren Laminatfolien (6, 7) oder einer einzelnen Laminatfolie, die an ihrem mittleren Abschnitt in zwei Teile (6, 7) gefaltet ist, geformt wird, mit Ausnahme eines Abschnitts entsprechend einer Basisendseite (4a) der Düse (4), um einen Fließkanal (3) im Inneren zu definieren, wobei jede Laminatfolie (6, 7) eine uniaxial oder biaxial ausgerichtete Basisfolienschicht (8, 9) und Versiegelungsschichten (10a, 10b, 11a, 11b) umfassen, die so laminiert sind, dass sie die Basisfolienschicht (8, 9) zwischen einander umschließen,
**dadurch gekennzeichnet, dass**
die Versiegelungsschichten (10a, 10b, 11a, 11b) jeweils die Basisfolienschicht (8, 9) in der vorderen und hinteren Laminatfolie (6, 7) an dem Abschnitt entsprechend der Basisendseite (4a) der Düse (4) in einem Zustand miteinander verschmolzen werden, in dem sie an einem Rand (8a, 9a) der Basisfolienschicht (8, 9) vorstehen, durch einen Prozess, in dem ein Endabschnitt der Laminatfolie (6, 7) unter Druck mit einem Heißsiegelungsmittel erhitzt wird, das ein Paar von Heißsiegelungsplatten (21) oder Heißsiegelungswalzen (22) umfasst, die sich parallel zueinander erstrecken, um von oben und unten mit Druck beaufschlagt zu werden und eine Endfläche der Basisfolienschicht (8, 9) einschließlich Haftfolien (10, 11) und dergleichen abzudecken, die an der Endfläche der Laminatfolie (6, 7) zwischen den Versiegelungsschichten (10a, 10b, 11a, 11b) und der Basisfolienschicht (8, 9) freiliegt.

3. Verfahren zur Herstellung einer Flüssigkeitsausstoßdüse (4) durch Verschmelzen von peripheren Randabschnitten eines Paares von vorderen und hinteren Laminatfolien (6, 7) oder einer einzelnen Laminatfolie, die an ihrem mittleren Abschnitt in zwei Teile (6, 7) gefaltet ist, mit Ausnahme eines Abschnitts entsprechend einer Basisendseite (4a) der Düse (4), um einen Fließkanal (3) im Inneren zu definieren, wobei jede Laminatfolie (6, 7) eine uniaxial oder biaxial ausgerichtete Basisfolienschicht (8, 9) und Versiegelungsschichten (10a, 10b, 11a, 11b) umfassen, die zumindest einseitig auf die Basisfolienschicht (8, 9) laminiert sind,
**dadurch gekennzeichnet, dass**
die Versiegelungsschicht (10a, 10b, 11a, 11b), die zumindest einseitig auf jede Basisfolienschicht (8, 9) laminiert ist, an dem Abschnitt entsprechend der Basisendseite (4a) der Düse (4) in einem Zustand verschmolzen wird, in dem sie an einem Rand der Basisfolienschicht (8, 9) vorsteht, um eine Endfläche einschließlich einer Haftschicht (10, 11) und dergleichen abzudecken, die an der Endfläche der Laminatfolie (6, 7) zwischen der Versiegelungsschicht (10a, 10b, 11a, 11b) und der Basisfolienschicht (8, 9) freiliegt, durch Erhitzen unter Druck mit einem Heißsiegelungsmittel, das ein Paar von Heißsiegelungsplatten (21) oder Heißsiegelungswalzen (22) umfasst, die sich parallel zueinander erstrecken, um von oben und unten mit Druck beaufschlagt zu werden, wobei anschließend die vordere und hintere Laminatfolie (6, 7) oder die einzelne Laminatfolie, die an einem mittleren Abschnitt in zwei Teile (6, 7) gefaltet ist, miteinander an einem peripheren Randabschnitt mit Ausnahme des Abschnitts entsprechend der Basis Endseite (4a) der Düse (4) verschmolzen werden.

4. Verfahren zur Herstellung einer Flüssigkeitsausstoßdüse (4) nach Anspruch 3, wobei die Versiegelungsschichten (10a, 10b, 11a, 11b), die so laminiert sind, dass sie die Basisfolienschicht (8, 9) an Seitenabschnitten entsprechend der Basisendseite (4a) der Düse (4) umschließen, miteinander in dem Zustand verschmolzen werden, in dem sie an dem Rand der Basisfolienschicht (8, 9) vorstehen, um eine Endfläche der Basisfolienschicht (8, 9) abzudecken, durch den Prozess des Erhitzens unter Druck mit einem Heißsiegelungsmittel, das ein Paar von Heißsiegelungsplatten (21) oder Heißsiegelungswalzen (22) umfasst, die sich parallel zueinander erstrecken, um von oben und unten mit Druck beaufschlagt zu werden.

## Revendications

1. Une buse de versement de liquide (4) formée par une fusion de parties d'arête périphérique d'une paire de films laminés avant et arrière (6, 7) ou d'un film laminé unique plié dans sa partie centrale en deux parties (6, 7), excluant une partie correspondant à un côté d'extrémité de base (4a) de la buse (4) pour définir un canal de versement (3) à l'intérieur, chaque film laminé (6, 7) comprenant une couche de film de base orientée de manière monoaxiale ou biaxiale (8, 9) et une couche(s) étanche (10a, 10b, 11a, 11b) laminée sur au moins une face à côté unique de la couche de film de base (8, 9),
**caractérisé en ce que**
la couche étanche (10a, 10b, 11a, 11b) laminée sur l'au moins une face à côté unique de chaque couche de film de base (8, 9) sur la partie correspondant au côté d'extrémité de base (4a) de la buse (4) est fusionnée dans un état de protrusion à partir d'une arête (8a, 9a) de la couche de film de base (8, 9) par un processus, dans lequel une partie d'extrémité du film laminé (6, 7) est chauffée sous pression par un moyen de thermoscellage comprenant une paire de plaques de thermoscellage (21) ou de rouleaux de thermoscellage (22) qui s'étendent l'un parallèlement à l'autre, de sorte à se trouver pressurisée depuis le dessus et le dessous pour couvrir une face d'extrémité comprenant une couche adhésive (10, 11) et l'équivalent exposé sur la face d'extrémité du film laminé (6, 7) entre la couche étanche (10a, 10b, 11a, 11b) et la couche de film de base (8, 9).

2. Une buse de versement de liquide (4) formée par une fusion de parties d'arête périphérique d'une paire de films laminés avant et arrière (6, 7) ou d'un film laminé unique plié dans sa partie centrale en deux parties (6, 7), excluant une partie correspondant à un côté d'extrémité de base (4a) de la buse (4) pour définir un canal de versement (3) à l'intérieur, chaque film laminé (6, 7) comprenant une couche de film de base orientée de manière monoaxiale ou biaxiale (8, 9) et des couches étanches (10a, 10b, 11a, 11b) laminées de sorte à prendre en sandwich la couche de film de base (8, 9),
**caractérisé en ce que**
les couches étanches (10a, 10b, 11a, 11b) prenant en sandwich chaque couche de film de base (8, 9) sur les films laminés avant et arrière (6, 7) sur la partie correspondant au côté d'extrémité de base (4a) de la buse (4) sont jointes par fusion l'une à l'autre dans un état de protrusion à partir d'une arête de la couche de film de base (8, 9) par un processus, dans lequel une partie d'extrémité du film laminé (6, 7) est chauffée sous pression par un moyen de thermoscellage comprenant une paire de plaques de thermoscellage (21) ou de rouleaux de thermoscellage (22) qui s'étendent l'un parallèlement à l'autre, de sorte à se trouver pressurisée depuis le dessus et le dessous pour couvrir une face d'extrémité de la couche de film de base (8, 9) comprenant des couches adhésives (10, 11) et l'équivalent exposé sur la face d'extrémité du film laminé (6, 7) entre les couches étanches (10a, 10b, 11a, 11b) et la couche de film de base (8, 9).

3. Procédé de production d'une buse de versement de liquide (4) par une fusion de parties d'arête périphérique d'une paire de films laminés avant et arrière (6, 7) ou d'un film laminé unique plié dans sa partie centrale en deux parties (6, 7), excluant une partie correspondant à un côté d'extrémité de base (4a) de la buse (4) pour définir un canal de versement à l'intérieur, chaque film laminé (6, 7) comprenant une couche de film de base orientée de manière monoaxiale ou biaxiale (8, 9) et une couche (s) étanche (10a, 10b, 11a, 11b) laminée sur au moins une face à côté unique de la couche de film de base (8, 9),
**caractérisé en ce que**
la couche étanche (10a, 10b, 11a, 11b) laminée sur l'au moins une face à côté unique de chaque couche de film de base (8, 9) sur la partie correspondant au côté d'extrémité de base (4a) de la buse (4) est fusionnée dans un état de protrusion à partir d'une arête de la couche de film de base (8, 9) pour couvrir une face d'extrémité comprenant une couche adhésive (10, 11) et l'équivalent exposé sur la face d'extrémité du film laminé (6, 7) entre la couche étanche (10a, 10b, 11a, 11b) et la couche de film de base (8, 9) en chauffant sous pression par un moyen de thermoscellage comprenant une paire de plaques de thermoscellage (21) ou de rouleaux de thermoscellage (22) qui s'étendent l'un parallèlement à l'autre de sorte à se trouver pressurisée depuis le dessus et le dessous, et ensuite les films laminés avant et arrière (6, 7) ou le film laminé unique plié dans la partie centrale en deux parties (6, 7) sont fusionnés l'un avec l'autre sur une partie d'arête périphérique excluant la partie correspondant au côté d'extrémité de base (4a) de la buse (4).

4. Le procédé de production d'une buse de versement de liquide (4) selon la revendication 3, dans lequel les couches étanches (10a, 10b, 11a, 11b) laminées de sorte à prendre en sandwich la couche de film de base (8, 9) sur des parties latérales correspondant au côté d'extrémité de base (4a) de la buse (4) sont jointes par fusion l'une à l'autre dans l'état de protrusion à partir de l'arête de la couche de film de base (8, 9) pour couvrir une face d'extrémité de la couche de film de base (8, 9) par le processus de chauffage sous pression par un moyen de thermoscellage comprenant une paire de plaques de thermoscellage (21) ou une paire de rouleaux de thermoscellage (22) qui s'étendent parallèlement l'un à l'autre, de sorte à se trouver pressurisées depuis le dessus et le dessous.
